# EUROPEAN PATENT SPECIFICATION

(11) **EP 2 399 664 B1**
(45) Date of publication and mention of the grant of the patent: **31.07.2013**
(21) Application number: 11168883.4
(22) Date of filing: 07.06.2011
(51) Int. Cl.: B01F 3/06, B01F 3/12, B01F 5/06, B01J 19/32, B01F 5/00

(54) **Method for mixing dust**
Staubmischverfahren
Procédé de mélange de poussière

(30) Priority: 22.06.2010 EP 10166948
(43) Date of publication of application: 28.12.2011
(73) Proprietor: Sulzer Chemtech AG, 8404 Winterthur (CH)
(72) Inventor: Hirschberg, Sebastian, 8408 Winterthur (CH)
(74) Representative: Sulzer Management AG

(56) References cited:
- EP-A1- 0 807 462
- EP-A1- 2 230 011
- WO-A1-98/55221
- WO-A1-2010/106119
- WO-A2-2008/000616
- DE-U1- 29 521 184
- US-A- 4 213 403
- US-A- 4 917 935
- US-A1- 2001 040 303

## Description

The invention relates to a method of mising dust including a static mixer for the mixing of dust and/or the homogeneous dispersion of dust in a passage. The static mixer is particularly suitable for a flue gas containing dust particles.

In practice, mixers with a cross channel structure according to DE 2 205 371 as combined mixer and vaporiser are in operation. The pressure drop of a mixer with a cross channel structure is however higher than the pressure drop of a mixing element, which makes use of guide vanes for deflecting the flow in the channel, such as the solution presented according to DE102008023585. Another type of mixing element employed for this purpose is shown in DE19539923 C1. Stacked packing consisting of a ceramic material for use with corrosive substances in mass transfer columns is known from WO 98/55221 A1. However none of the prior art static mixers have been designed for mixing a dust within a gas, thus a flow containing solid particles.

It is an object of the invention to distribute dust homogeneously over the passage cross-section over a short path length by means of a static mixer.

The object of the invention is solved by a method of mixing dust comprising the step of introducing a flow of dust particles, typically contained in a flow of gas, into a closed passage, directing the flow in the closed passage to a static mixer, wherein the static mixer is disposed with a mixing element, the mixing element having a surface which is inclined with respect to the main axis of the closed passage with the surface of the mixing element being disposed with a surface structure of a small scale, such that the dust particles arriving at the surface are reflected by the surface structure in a random manner.

A dust mixing device contains a closed passage and a static mixer arranged in the closed passage, wherein the static mixer comprises a mixing element for deflection of a flow of dust particles inside the passage and the mixing element is disposed at least partially with a surface structure of a small scale.

The flow of dust particles is deflected on the surfaces of the mixing element and a turbulent flow is obtained including the generation of vortices. For dust particles of a large size, typically for particles bigger then 0.05 mm, which are critical for erosion, these dust particles can not follow the deflection of the flow and therefore impact onto the surface of the mixing elements. The dust particles are reflected from the surface, continue their path in the flue gas flow until they arrive at a further mixing element surface or finally leave the static mixer. It has been observed that such large dust particles tend to concentrate at certain locations of the mixer. Due to the formation of such dust particle concentrations, the erosion effect can vary locally, thus there are locations with a pronounced erosion effect and other locations in the passage with a negligible erosion effect. When using a surface structure, this effect can be reduced as the dust particles are reflected from such a surface structure in a random manner.

The surface structure of a small scale advantageously comprises ribs, protrusions or grooves whereby the height or depth of the small scale structure is at least the average particle diameter d50 measured by mass of the dust. Thereby it is ensured that neighbouring dust particles arriving at the surface of the mixing element are reflected by different angles and thus contribute to the homogeneous distribution of the dust in the passage.

In particular, the surface structure comprises protrusions, ribs or grooves of a height or depth of at most 20 mm.

According to a particularly preferred embodiment the mixing element comprises a corrugated profile. Such a corrugated profile comprises a periodically repeating sequence of elevated portions and valley-like depressions. According to an advantageous embodiment, the corrugated profile can be shaped as a wave-shaped profile.

In particular, the static mixer comprises a first mixing element and a second mixing element, wherein the first mixing element comprises a first corrugated profile, said second mixing element comprises a second corrugated profile, wherein the second mixing element is arranged adjacent to the first mixing element, such that the corrugated profiles form a crosswise arrangement.

The corrugated profile can comprise a plurality of open channels whereby the open channels include a first corrugation valley, a first corrugation peak and a second corrugation peak, and the first corrugation peak and the second corrugation peak bound the first corrugation valley. The first corrugation peak and the second corrugation peak can have a first apex and a second apex and the corrugation valley can have a valley bottom.

Furthermore the first mixing element is advantageously in touching contact with the second mixing element, such that at least some of the apices of the corrugation peaks of the first mixing element and the valley bottoms of the corrugation valleys of the second mixing element have a common point of contact.

The angle between the open channels of neighbouring mixing elements is in a range of 10° to 90°, preferably in a range of 20° to 80° most preferred in a range of 25 to 75°.

The corrugated profile has a corrugation height, whereby the corrugation height is defined as the normal spacing between the first apex of the first corrugation peak and the valley bottom of the first corrugation valley. The surface structure of a small scale thus in particular the ribs, protrusions or grooves are preferably of a height or depth which is smaller than 1/20 of the corrugation height.

A preferred use of the dust mixing device in accordance with any of the preceding embodiments is for distributing dust homogeneously in the closed passage.

According to a second preferred embodiment the mixing element includes at least one pair of guide elements. The guide elements are used for mixing of the dust and homogeneously distribute it across the passage. For a prolonged duration of the life time of equipment which is arranged in the flow path of the dust, it is important that the dust is distributed as homogeneously as possible over the largest possible cross-section of such equipment in order to avoid spots of erosion and/or corrosion.

According to a particularly advantageous embodiment the pair of guide elements includes a first vane and a second vane. Preferably the first and second vanes each comprise an edge at the leading side which is arranged perpendicular to the flow and parallel to the height or width of the passage.

In the following the invention will be explained in connection with the figures. It is shown in:
- Fig. 1: a static mixer arranged in a passage
- Fig. 2: a first and second mixing element of the static mixer according to Fig. 1
- Fig. 3: a detail of a mixing element of the static mixer according to Fig. 1 or Fig. 2
- Fig. 4: a detail of the first sheet or second sheet showing two possible surface structures
- Fig. 5: a detail of the first or second sheet showing further possible surface structures
- Fig. 6: a static mixer in accordance with a second embodiment
- Fig. 7: a mixing element of the static mixer of Fig. 6
- Fig. 8: the impact of dust particles of a conventional static mixer
- Fig. 9: the impact of dust particles on a static mixer according to the invention
- Fig. 10: the flow of dust particles through the static mixer

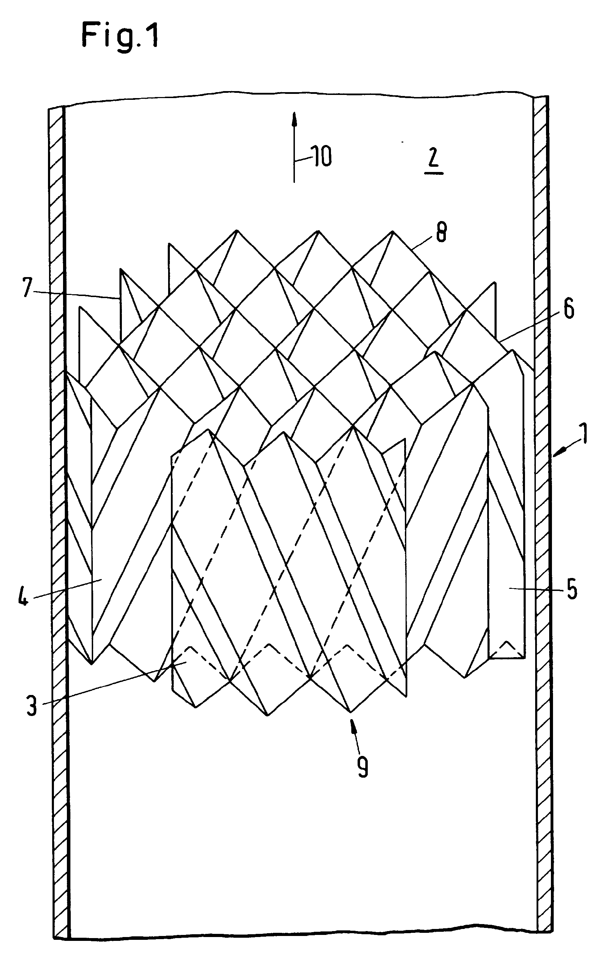

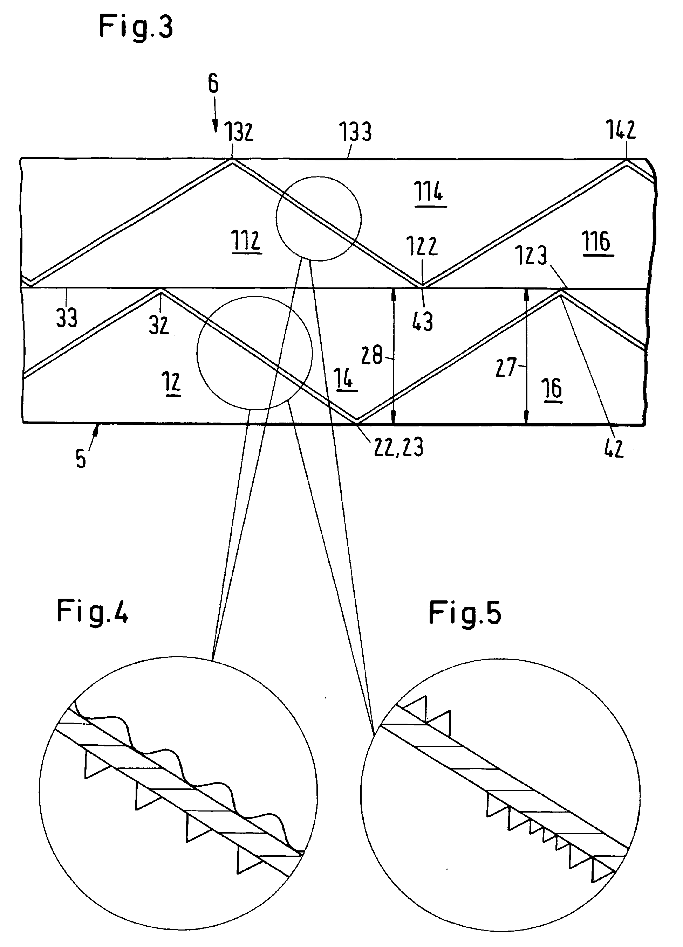

Fig. 1 shows a dust mixing device 1 used in accordance with the invention including a static mixer 9 arranged in a passage 2. The static mixer 9 is made of a plurality of mixing elements 3,4,5,6,7,8 which are in a regularly repeating geometrical relationship to one another. Each of the mixing elements 3,4,5,6,7,8 is made of thin-walled sheets which have a corrugated profile. The corrugated profile is characterized by a periodically repeating sequence of elevated portions, that is of corrugation peaks, and valley-like depressions, that is corrugation valleys. This corrugated profile can in particular be made as a fold with a zigzag section with acutely converging edges as shown in detail in Fig. 3.

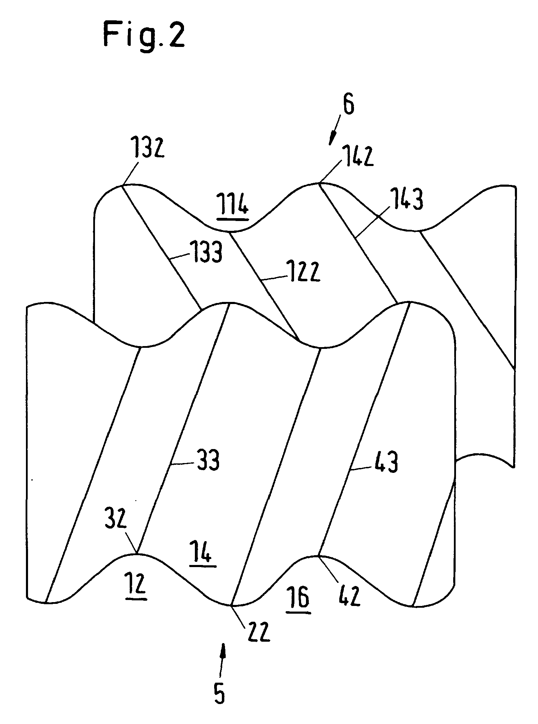

Fig. 2 shows two adjacent mixing elements 5,6 of the static mixer 9 in accordance with Fig. 1. A first mixing element 5 is arranged adjacent to a second mixing element 6. The first mixing element 5 and the second mixing element 6 can in particular include a thin-walled sheet made of sheet metal, metal fabric, plastic or of ceramic material. The sheet can at least partially be provided with a coating of plastics, metals, metal alloys, metal oxides, ceramics, cermets or carbides or combinations thereof to enhance the resistance of the mixing element toward chemical influences such as corrosion or thermal influences such as temperature or mechanical influences such as pressure or erosion.

The corrugated profile can in particular comprise rounded peaks and valley bottoms as shown in Fig. 2.

The mixing elements 5, 6 are arranged with respect to one another so that the corrugated profiles of two adjacent mixing elements, thus two adjacent sheets are inclined at an angle to the main direction of flow 10. The corrugated profiles of adjacent sheets are arranged cross-wise with respect to one another.

The first mixing element 5 and the second mixing element 6 in Fig. 3 are shown in a view which shows a detail of the surface of the static mixer exposed to the dust flow, thus in a section normal to the main axis of the passage 2.

The first mixing element 5 has a corrugated profile with a plurality of open channels 12, 14, 16 being formed. The channels include a first corrugation valley 22, a first corrugation peak 32 and a second corrugation peak 42. The first corrugation peak 32 and the second corrugation peak 42 bound the first corrugation valley 22. The first corrugation peak 32 and the second corrugation peak 42 have a first apex 33 and a second apex 43.

The normal spacing between the first apex 33 of the first corrugation peak 32 and the valley bottom 23 of the first corrugation valley 22 is called the corrugation height 28.

In a mixing element in accordance with this embodiment, the valley height 28 is in particular substantially constant, that is the variations of the height are in the range of the usual tolerances which lie in the region of 0.1 mm ― 10 mm depending on the size of the element.

The second mixing element 6 of the static mixer has a corrugated profile with a plurality of open channels 112, 114, 116 being formed. The channels include a first corrugation valley 122, a first corrugation peak 132 and a second corrugation peak 142. The first corrugation peak 132 and the second corrugation peak 142 bound the first corrugation valley 122. The first corrugation peak 132 and the second corrugation peak 142 have a first apex 133 and a second apex 143.

The normal spacing 27 extends from the valley bottom 23 of the corrugation valley 22 to the corresponding valley bottom 123 of the second mixing element 6.

The normal spacing 27 can be the same or greater than the corrugation height 28. lf the normal spacing 27 is the same as the corrugation height 28, the first and second mixing elements are in contact, whereas if the normal spacing 27 is greater than the corrugation height, a gap is formed between the first mixing element 5 and the second mixing element 6.

At least a part of the apex can be formed as an edge. At least some of the corrugation valleys can be formed in a V shape. The normal spacing between the valley bottom and the apex is essentially the same for all corrugation peaks of the mixing element in accordance with Fig. 3.

The first mixing element 5 can be arranged crosswise to the second mixing element 6. The angle of corrugation can be in a range of 10 to 90°, preferably in a range of 20 to 80°, most preferred in a range of 25 to 75°. The angle of corrugation is defined as the angle between the first apex 33 of the first mixing element 5 and the first apex 133 of the second mixing element 6.

Fig. 4 shows a detail of the corrugated profile providing a view on the smallscale surface structure of one of the mixing elements. The surface structure can comprise a wave-like structure or a structure containing individual peaks.

Fig. 5 shows a further detail of the corrugated profile providing a view on the surface structure of one of the mixing elements in which a surface structure is only provided on a portion of the surface of the mixing element. Alternatively or in addition thereto, a combination of different surface structures may be provided, for example surface structures of variable height may be provided.

An additive can be introduced into a dust flow, thus a flow of dust particles alone or contained in a gas flow. The additive is to be mixed thoroughly with the dust flow. The additive can be supplied in its liquid state and be vaporised only when contacted by the dust flow. In such cases, spray nozzles may be employed to spray the additive directly into the dust flow. For a liquid additive spray nozzles are used to disperse the liquid into fine droplets in the dust flow.

As an example, spray nozzles are used frequently for dispersing of liquid water-ammonia mixture (NH₄0H) directly into the dust flow in flue gas denitrification plants such as those in thermal power plants.

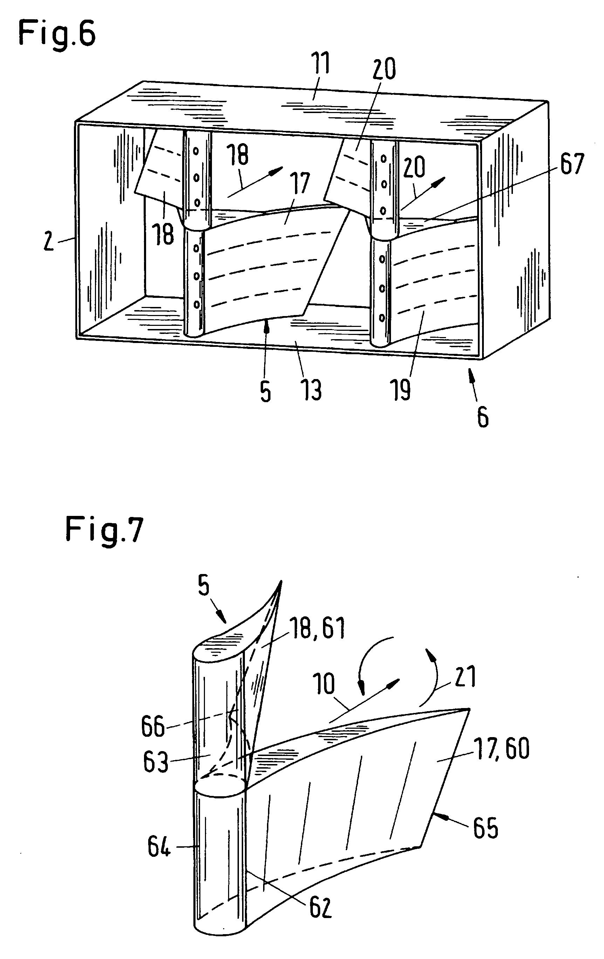

The static mixer 9 according to a second preferred embodiment as shown in Fig. 6 contains a plurality of guide elements 17, 18, 19, 20 which are formed in particular as thin-walled guide elements and extend in the flow direction in such a way that they offer the lowest possible flow resistance. The guide elements 17, 18, 19, 20 can be attached to the wall of the passage 2 at their outer edges, for example by a welded connection. The passage 2 is in this case of rectangular shape. Alternatively the passage 2 may be a pipe of circular cross-section. An upper side 11 and a lower side 13 of the passage 2 define the height of the passage 2. In the illustrated detail in Fig. 7, the guide elements 17, 18 are shown as wing-shaped vanes. The guide elements are at least partly provided with surface structures, such as for instance shown in Fig. 5 or Fig. 6.

The static mixer intensifies the turbulent flow present in passage 2 and generates additional large vortices which promote the large scale distribution of dust transverse to the main flow direction. Different constructions for such static mixers can be considered. Static mixers which have a low pressure drop are disposed with mixing elements which do not cause the flow to detach. An example for a static mixer with a favourable pressure drop is described in W02008000616. The vortex-generating guide elements 17, 18 are arranged such that the flow does not detach.

The larger dust particles show a slip behaviour compared to the main flow when the flow lines are curved. Therefore, at least the larger dust particles can not follow the deflection of the flow in the passage caused by the guide elements. In the vortex behind the static mixer, the dust particles can also move away from the center of the vortex into the direction of the walls of the passage 2. Thus also the walls of the passage may be provided with surface structures, as for instance disclosed in Fig. 4 or Fig. 5.

The mixing element shown in Fig. 7 includes at least one pair of guide elements 17, 18 generating a flow swirl 21, whose axis faces in the direction of the flow 10, in the passage 2. The pair of guide elements 17, 18 includes a first vane 60 and a second vane 61. The edges 63, 64 of the vanes 60, 61 at the front end 62 of the mixing element at the leading side are perpendicular to the flow 10 and parallel to the height of the passage 2.

According to Fig. 7, The vanes 60 and 61 have onflow surfaces or side walls 65, 66 which follow the front end 62 downstream and which are bent out in a concave manner and in opposite senses. The axis of the passage 2 defines the direction of flow being the main flow in which the swirl 21 faces.

A gusset 67 can be provided for an improved mechanical stability of the vane pair 60, 61. The gusset connects the side walls of vane 60 to vane 61 as best shown in Fig. 6.

The vanes 60, 61 made as lightweight constructions can be made such that, with a vane height of one metre (or also more), they lack natural vibrations whose frequencies lie within the range from 1 to 10 Hz. The natural vibrations lying outside this range are not excited by the flow 10. Due to the aerodynamic shape of the vanes, during the inflow, the flow 10 enters into a region of the static mixer elements in which the flow cross-sections between the vanes reduces continuously. Thereby the kinetic energy of the flow is increased and a pressure drop is observed. The flow cross-sections subsequently expand in the manner of a diffuser. In the region of the diffusor, the pressure can increase again without any substantial dissipation of the kinetic energy. The reduced dissipation has the consequence that only weakly formed secondary vortices are created. The vanes 60, 61 are preferably stiffened by the lightweight constructions such that an excitement of oscillations is also either fully absent due to changed mechanical properties or is at least shifted towards higher and so non-critical oscillation frequencies.

Alternatively the profile of the guide element can be hollow. A metering element may be provided inside the guide element for introducing an additive into the flow.

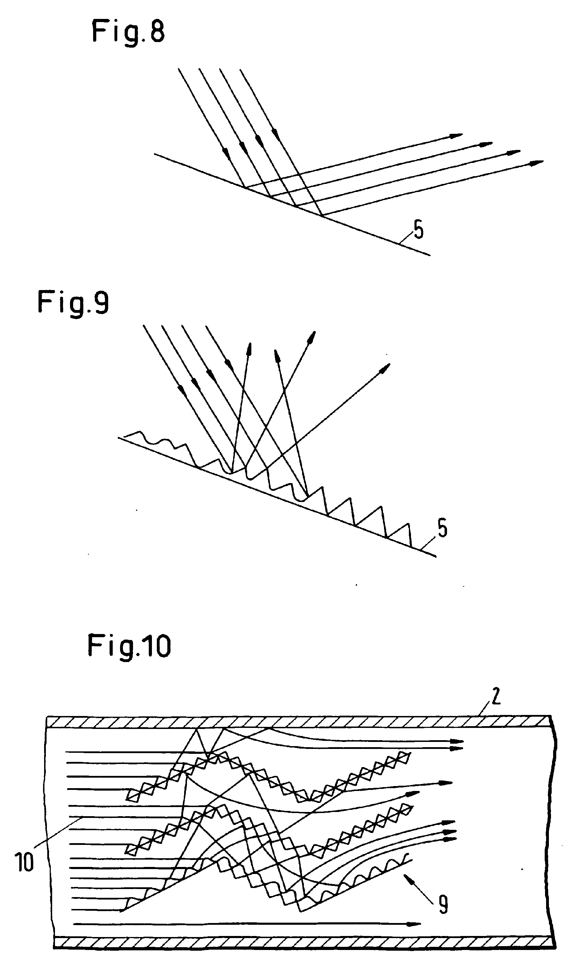

Fig. 8 shows the impact of dust particles on a conventional static mixer. The dust particles, which arrive in roughly parallel tracks are reflected on the surface of the static mixing element and leave also in roughly parallel tracks. When subjected to the flow, the dust particles are entrained by the flow and their tracks tend to merge, thus the concentration of dust particles can locally increase.

In Fig. 9 the mixing element is provided with s a surface structure of a small scale. Such a structure of a small scale can comprise a plurality of ribs, grooves, protrusions. The surface structure of a small scale has an effect on the angle of reflexion of the dust particles. Due to the fact that a surface structure of a small scale is characterised by a locally variable angle of the surface with respect to the flow, neighbouring dust particles may impact at different angles on the surface of the mixing element. Therefore the dust particles are reflected from the surface in a random fashion. Consequently the formation of concentrations of dust particles in certain regions of the surface due to the formation of streams of a high dust particle concentration or of a concentration of large dust particles can be avoided at least to some extent. The surface structure of a small scale can be applied advantageously for mixing elements which are already known to be advantageous e.g. in static mixers as disclosed in US3785620 or W02008/000616.

Fig. 10 shows the flow of dust particles through the static mixer which is provided with mixing elements in the passage 2. The mixing elements are disposed with a structure of a small scale. Schematically the progression of dust particles through the static mixer is shown. The dust particles are reflected as shown in Fig. 9 and thereby are distributed randomly into the flow passing the mixing elements. Thereby the formation of streams of a high concentration of dust particles can be avoided. Thereby the life time of the static mixer and any apparatus arranged downstream of the static mixer can be increased.

## Claims

1. A method of mixing dust comprising the step of introducing a flow of dust particles into a closed passage (2), directing the flow of dust particles in the closed passage to a static mixer (9), wherein the static mixer (9) is disposed with a mixing element (3,4,5,6,7,8), the mixing element having a surface which is inclined with respect to the main axis of the closed passage with the surface of the mixing element being disposed with a surface structure of a small scale, such that the dust particles arriving at the surface are reflected by the surface structure in a random manner.

2. A method in accordance with claim 1, whereby the surface structure comprises protrusions, ribs or grooves which have a height or depth, which is at least the same as the average particle diameter d50 measured by mass of the dust.

3. A method in accordance with any of the preceding claims, whereby the surface structure comprises protrusions, ribs or grooves of a height or depth of at most 20 mm.

4. A method in accordance with any one of the preceding claims, wherein the mixing element comprises a corrugated profile.

5. A method in accordance with claim 4, wherein the corrugated profile comprises a periodically repeating sequence of elevated portions and valley-like depressions.

6. A method in accordance with claim 4 or 5, wherein the corrugated profile is a wave-shaped profile.

7. A method in accordance with claims 4 to 6, comprising a first mixing element and a second mixing element, wherein the first mixing element comprises a first corrugated profile, said second mixing element comprises a second corrugated profile, wherein the second mixing element is arranged adjacent to the first mixing element, such that the corrugated profiles form a crosswise arrangement whereby the fluid flow is deflected.

8. A method in accordance with claim 7, wherein the corrugated profile comprises a plurality of open channels (12, 14, 16, 112, 114, 116) whereby the open channels include a first corrugation valley (22, 122) a first corrugation peak (32,132) and a second corrugation peak (42, 142) and the first corrugation peak (32 132) and the second corrugation peak (42,142) bound the first corrugation valley (22, 122).

9. A method in accordance with claim 8, wherein the first corrugation peak (32, 132) and the second corrugation peak (42,142) have a first apex (33,133) and a second apex (43,143) and the corrugation valley (22, 122) has a valley bottom (23, 123).

10. A method in accordance with claim 9, wherein the first mixing element is in touching contact with the second mixing element, such that at least some of the apices (33, 133, 43,143) of the corrugation peaks of the first mixing element and the valley bottoms (23, 123) of the corrugation valleys (22, 122) of the second mixing element have a common point of contact.

11. A method in accordance with one of claims 8 to 10 , wherein the angle between the open channels (12, 14, 16, 112, 114, 116) of neighbouring mixing elements is in a range of 10° to 90°, preferably in a range of 20° to 80° most preferred in a range of 25 to 75°.

12. A method in accordance with any of claims 9 to 11, wherein a corrugation height (28) is defined as the normal spacing between the first apex 33 of the first corrugation peak 32 and the valley bottom 23 of the first corrugation valley 22 and wherein the surface structure of a small scale comprises ribs, protrusions or grooves of a height or depth which is smaller than 1/20 of the corrugation height.

13. A method in accordance with any of the preceding claims, wherein the mixing element includes at least one pair of guide elements.

14. A method in accordance with any of the preceding claims, wherein the walls of the passage are provided with surface structures.

## Patentansprüche

1. Verfahren zum Mischen von Staub, das den Schritt umfasst, dass eine Strömung von Staubpartikeln in einen geschlossenen Durchgang (2) eingeleitet wird, die Strömung von Staubpartikeln in dem geschlossenen Durchgang zu einem statischen Mischer (9) gelenkt wird, wobei der statische Mischer (9) mit einem Mischelement (3, 4, 5, 6, 7, 8) eingerichtet ist, wobei das Mischelement eine Oberfläche aufweist, die mit Bezug auf die Hauptachse des geschlossenen Durchgangs geneigt ist, wobei die Oberfläche des Mischelements mit einer Oberflächenstruktur in einem kleinen Maßstab eingerichtet ist, so dass die Staubpartikel, die an der Oberfläche ankommen, durch die Oberflächenstruktur auf eine zufällige Weise reflektiert werden.

2. Verfahren nach Anspruch 1,
wobei die Oberflächenstruktur Vorsprünge, Rippen oder Nuten umfasst, die eine Höhe oder Tiefe aufweisen, die zumindest gleich wie der durchschnittliche Partikeldurchmesser d50, bezogen auf die Masse des Staubs gemessen, ist.

3. Verfahren nach einem der vorhergehenden Ansprüche,
wobei die Oberflächenstruktur Vorsprünge, Rippen oder Nuten mit einer Höhe oder Tiefe von höchstens 20 mm umfasst.

4. Verfahren nach einem der vorhergehenden Ansprüche,
wobei das Mischelement ein korrugiertes Profil umfasst.

5. Verfahren nach Anspruch 4,
wobei das korrugierte Profil eine sich periodisch wiederholende Folge von erhöhten Abschnitten und talartigen Vertiefungen umfasst.

6. Verfahren nach Anspruch 4 oder 5,
wobei das korrugierte Profil ein wellenförmiges Profil ist.

7. Verfahren nach den Ansprüchen 4 bis 6,
das ein erstes Mischelement und ein zweites Mischelement umfasst, wobei das erste Mischelement ein erstes korrugiertes Profil umfasst, das zweite Mischelement ein zweites korrugiertes Profil umfasst, wobei das zweite Mischelement benachbart zu dem ersten Mischelement angeordnet ist, so dass die korrugierten Profile eine Überkreuzanordnung bilden, wodurch die Fluidströmung abgelenkt wird.

8. Verfahren nach Anspruch 7,
wobei das korrugierte Profil eine Mehrzahl von offenen Kanälen (12, 14, 16, 112, 114, 116) umfasst, wobei die offenen Kanäle ein erstes Korrugationstal (22, 122), eine erste Korrugationsspitze (32, 132) und eine zweite Korrugationsspitze (42, 142) umfassen, und die erste Korrugationsspitze (32, 132) und die zweite Korrugationsspitze (42, 142) das erste Korrugationstal (22, 122) begrenzen.

9. Verfahren nach Anspruch 8,
wobei die erste Korrugationsspitze (32, 132) und die zweite Korrugationsspitze (42, 142) einen ersten Scheitel (33, 133) und einen zweiten Scheitel (43, 143) aufweisen und das Korrugationstal (22, 122) einen Talboden (23, 123) aufweist.

10. Verfahren nach Anspruch 9,
wobei das erste Mischelement in Berührungskontakt mit dem zweiten Mischelement steht, so dass zumindest manche der Scheitel (33, 133, 43, 143) der Korrugationsspitzen des ersten Mischelements und der Talböden (23, 123) der Korrugationsstäler (22, 122) des zweiten Mischelements einen gemeinsamen Kontaktpunkt aufweisen.

11. Verfahren nach einem der Ansprüche 8 bis 10,
wobei der Winkel zwischen den offenen Kanälen (12, 14, 16, 112, 114, 116) von benachbarten Mischelementen in einem Bereich von 10° bis 90°, bevorzugt in einem Bereich von 20° bis 80°, am stärksten bevorzugt in einem Bereich von 25 bis 75° liegt.

12. Verfahren nach einem der Ansprüche 9 bis 11,
wobei eine Korrugationshöhe (28) als der normale Abstand zwischen dem ersten Scheitel (33) der ersten Korrugationsspitze (32) und dem Talboden (23) des ersten Korrugationstals (22) definiert ist, und wobei die Oberflächenstruktur mit einem kleinen Maßstab Rippen, Vorsprünge oder Nuten mit einer Höhe oder Tiefe umfasst, die kleiner als ein 1/20 der Korrugationshöhe ist.

13. Verfahren nach einem der vorhergehenden Ansprüche,
wobei das Mischelement zumindest ein Paar Führungselemente umfasst.

14. Verfahren nach einem der vorhergehenden Ansprüche,
wobei die Wände des Durchgangs mit Oberflächenstrukturen versehen sind.

## Revendications

1. Procédé de mélange de poussière comprenant les étapes consistant à introduire un flux de particules de poussière dans un passage fermé (2), diriger le flux de particules de poussière dans le passage fermé vers un mélangeur statique (9), dans lequel le mélangeur statique (9) est disposé avec un élément de mélange (3, 4, 5, 6, 7, 8), l'élément de mélange ayant une surface qui est inclinée par rapport à l'axe principal du passage fermé, avec la surface de l'élément de mélange qui est disposée avec une structure de surface de petite taille, de sorte que les particules de poussière arrivant à la surface sont reflétées par la structure de surface d'une manière aléatoire.

2. Procédé selon la revendication 1, moyennant quoi la structure de surface comprend des saillies, des nervures ou des rainures qui ont une hauteur ou une profondeur qui est au moins identique au diamètre particulaire moyen d50 mesuré par la masse de la poussière.

3. Procédé selon l'une quelconque des revendications précédentes, moyennant quoi la structure de surface comprend des saillies, des nervures ou des rainures d'une hauteur ou d'une profondeur de 20 mm au maximum.

4. Procédé selon l'une quelconque des revendications précédentes, dans lequel l'élément de mélange comprend un profil ondulé.

5. Procédé selon la revendication 4, dans lequel le profil ondulé comprend une séquence de parties élevées et de dépressions en forme de creux, répétée de manière périodique.

6. Procédé selon la revendication 4 ou 5, dans lequel le profil ondulé est un profil en forme d'onde.

7. Procédé selon les revendications 4 à 6, comprenant un premier élément de mélange et un second élément de mélange, dans lequel le premier élément de mélange comprend un premier profil ondulé, ledit second élément de mélange comprend un second profil ondulé, dans lequel le second élément de mélange est agencé de manière adjacente au premier élément de mélange, de sorte que les profils ondulés forment un agencement en croix moyennant quoi le flux de fluide est dévié.

8. Procédé selon la revendication 7, dans lequel le profil ondulé comprend une pluralité de canaux ouverts (12, 14, 112, 114, 116), moyennant quoi les canaux ouverts comprennent un premier creux d'ondulation (22, 122), une première crête d'ondulation (32, 132) et une seconde crête d'ondulation (42, 142) et la première crête d'ondulation (32, 132) et la seconde crête d'ondulation (42, 142) relient le premier creux d'ondulation (22, 122).

9. Procédé selon la revendication 8, dans lequel la première crête d'ondulation (32, 132) et la seconde crête d'ondulation (42, 142) ont un premier sommet (33, 133) et un second sommet (43, 143) et le creux d'ondulation (22, 122) a un fond de creux (23, 123).

10. Procédé selon la revendication 9, dans lequel le premier élément de mélange est en contact avec le second élément de mélange, de sorte que certains des sommets (33, 133, 43, 143) des crêtes d'ondulation du premier élément de mélange et les fonds de crête (23, 123) des creux d'ondulation (22, 122) du second élément de mélange ont un point de contact commun.

11. Procédé selon l'une des revendications 8 à 01, dans lequel l'angle entre les canaux ouverts (12, 14, 16, 112, 114, 116) des éléments de mélange voisins est dans une plage de 10° à 90°, de préférence dans une plage de 20° à 80°, de manière préférée entre toutes dans une plage de 25 à 75°.

12. Procédé selon l'une quelconque des revendications 9 à 11, dans lequel une hauteur d'ondulation (28) est définie comme étant l'espacement normal entre le premier sommet (33) de la première crête d'ondulation (32) et le fond de creux (23) du premier creux d'ondulation (22) et dans lequel la structure de surface de petite taille comprend des nervures, des saillies ou des rainures d'une hauteur ou d'une profondeur qui est inférieure à 1/20 de la hauteur d'ondulation.

13. Procédé selon l'une quelconque des revendications précédentes, dans lequel l'élément de mélange comprend au moins une paire d'éléments de guidage.

14. Procédé selon l'une quelconque des revendications précédentes, dans lequel les parois du passage sont dotées de structures de surface.
